# EUROPEAN PATENT APPLICATION

(11) **EP 3 240 270 A1**
(43) Date of publication of application: **01.11.2017**
(21) Application number: 14908890.8
(22) Date of filing: 31.12.2014
(51) Int. Cl.: H04M 1/725

(54) **METHOD, DEVICE AND TERMINAL FOR PROCESSING COMMUNICATION EVENT OF TERMINAL**

(30) Priority: 25.12.2014 CN 201410822422
(71) Applicant: Yulong Computer Telecommunication Scientific (Shenzhen) Co., Ltd., Shenzhen, Guangdong 518057 (CN)
(72) Inventor: YE, Ruiquan, Shenzhen Guangdong 518057 (CN); YANG, Li, Shenzhen Guangdong 518057 (CN); TAN, Weitao, Shenzhen Guangdong 518057 (CN)
(74) Representative: Dr. Weitzel & Partner
(86) International application number: PCT/CN2014/096018
(87) International publication number: WO 2016/101323

(57) **Abstract**

The present invention provides a method and device for processing a communication event of a terminal and the terminal. The terminal includes a plurality of systems, and the method for processing the communication event of the terminal includes: upon the receipt of a communication event, obtaining information of an initiator of the communication event; according to the information of the initiator of the communication event, determining the storage location of the information of the initiator in the plurality of systems; and when the information of the initiator is determined as being stored in any one of the plurality of systems, switching a current running system of the terminal into any one of the systems to process the communication event. The technical solution of the present invention can ensure that each system of the terminal respectively processes the communication event of a contact corresponding to a security coefficient of each system, thereby preventing the communication event of an important contact from being leaked, and effectively ensuring the security of the communication event of the important contact. Meanwhile, the resources of a system with a higher security coefficient are prevented from being wasted when the communication event of an unimportant contact is processed in the system with a higher security coefficient.

## Description

### Field of the Invention

The present invention relates to the technical field of terminals, and particularly to a method for processing a communication event of a terminal, a device for processing the communication event of the terminal and the terminal.

### Background of the Invention

At present, an intelligent terminal with dual systems, such as with a PPD (Personal Private Domain, standard system) and an SED (Secure Enterprise Domain, secure system), will randomly answer a call in the two systems upon the receipt of call information. Since the call is randomly answered in the two systems, some calls with lower security requirements may be answered in the SED, while some calls with higher security requirements may be answered in the PPD. If the calls with higher security requirements are answered in the PPD, the entire call process is carried out in the PPD, then the security of the call cannot be ensured, this may lead to the leakage of the call information of a user, resulting in unnecessary losses; and if the calls with lower security requirements are answered in the SED, resources in the SED will be additionally wasted.

Therefore, how to ensure that each system of a terminal respectively processes a communication event of a contact corresponding to a security coefficient of each system to guarantee the security of the communication event of an important contact and meanwhile avoid wasting the resources of the system with a higher security coefficient is a technical problem to be solved urgently.

### Summary of the Invention

On the basis of at least one of the aforementioned technical problems, the present invention provides a new solution for processing a communication event of a terminal, which can ensure that each system of the terminal respectively processes the communication event of a contact corresponding to a security coefficient of each system, in order to prevent the communication event of an important contact from being leaked, and effectively ensure the security of the communication event of the important contact. Meanwhile, the resources of a system with a higher security coefficient are prevented from being wasted when the communication event of an unimportant contact is processed in the system with a higher security coefficient.

In view of this, the present invention provides a method for processing a communication event of a terminal. The terminal includes a plurality of systems, and the method for processing the communication event of the terminal includes: upon the receipt of a communication event, obtaining information of an initiator of the communication event; according to the information of the initiator of the communication event, determining the storage location of the information of the initiator in the plurality of systems; and when the information of the initiator is determined as being stored in any one of the plurality of systems, switching a current running system of the terminal into any one of the systems to process the communication event.

In the technical solution, when the information of the initiator of the communication event is determined as being stored in any one of the systems, the current running system of the terminal is switched into any one of the systems to process the communication event. Therefore, when a user needs to process the communication event of an important contact in a system with a higher security coefficient, the important contact can be stored in the system with higher security coefficient, in this way, when the important contact initiates the communication event, the communication event can be switched into the system with higher security coefficient to be processed, in order to prevent the communication event of the important contact from being leaked and effectively ensure the security of the communication event of the important contact. Meanwhile, an unimportant contact can also be stored in a system with a lower security coefficient, so that the resources of a system with a higher security coefficient are prevented from being wasted when the communication event of an unimportant contact is processed in the system with a higher security coefficient.

The information of the initiator can be contact details (e.g., a phone number, a mailbox address and the like) of the initiator, an initiator identifier (e.g., an initiator name), etc.

The communication event includes: a voice communication event and a text communication event. The voice communication event can be a voice call, a voice call in a third party application (e.g., QQ, WeChat or the like); and the text communication event can be a short message, mail information, a text message in the third party application, etc.

The processing of voice call information includes: answering the voice call information and the like; and the processing of text call information includes: checking, editing, forwarding, etc.

In the aforementioned technical solution, preferably, the method further includes: when the information of the initiator is determined as being not stored in the terminal, switching the current running system of the terminal into a specified system of the plurality of systems to process the communication event.

In the technical solution, if the information of the initiator of the communication event is not stored in the terminal, it indicates that the information of the initiator of the communication event may not be the important contact, then the communication event can be processed in the specified system with lower security coefficient; and of course, the communication event can also be processed in the system with higher security coefficient.

In the aforementioned technical solution, preferably, the terminal includes a first system and a second system, the specified system is the first system, and then the method for processing the communication event of the terminal further includes: when the information of the initiator is determined as being stored in the second system, carrying out private processing on the communication event to prevent the communication event from being leaked.

In the technical solution, when the communication event is processed in the second system (e.g., a secure system), private processing is carried out on the communication event to prevent the communication event from being leaked and effectively protect the security of the information of the user.

In the aforementioned technical solution, preferably, the communication event is normally processed in the first system. In the technical solution, since the information of the initiator of the communication event may not be the important contact, when switching to the first system, the communication event does not need to be performed with other processing (e.g., private processing) and can be directly processed.

In the aforementioned technical solution, preferably, the carrying out private processing on the communication event includes: modifying and/or concealing the information of the initiator of the communication event, and modifying and/or concealing text contents in the communication event. Of course, anti-eavesdrop processing and the like can also be carried out on the voice call information. According to another aspect of the present invention, a device for processing a communication event of a terminal is further provided. The terminal includes a plurality of systems, and the device for processing the communication event of the terminal includes: an obtaining unit used for, upon the receipt of a communication event, obtaining information of an initiator of the communication event; a determining unit used for, according to the information of the initiator of the communication event, determining the storage location of the information of the initiator in the plurality of systems; and a processing unit used for, when the determining unit determines that the information of the initiator is stored in any one of the plurality of systems, switching a current running system of the terminal into any one of the systems to process the communication event.

In the technical solution, when the information of the initiator of the communication event is determined as being stored in any one of the systems, the current running system of the terminal is switched into any one of the systems to process the communication event. Therefore, when a user needs to process the communication event of an important contact in a system with a higher security coefficient, the important contact can be stored in the system with higher security coefficient, in this way, when the important contact initiates a communication event, the communication event can be switched into the system with higher security coefficient to be processed, in order to prevent the communication event of the important contact from being leaked and effectively ensure the security of the communication event of the important contact. Meanwhile, an unimportant contact can also be stored in a system with a lower security coefficient, so that the resources of a system with a higher security coefficient are prevented from being wasted when the communication event of an unimportant contact is processed in the system with a higher security coefficient.

The information of the initiator can be contact details (e.g., a phone number, a mailbox address and the like) of the initiator, an initiator identifier (e.g., an initiator name), etc.

The communication event includes: a voice communication event and a text communication event. The voice communication event can be a voice call, a voice call in a third party application (e.g., QQ, WeChat or the like); and the text communication event can be a short message, mail information, a text message in the third party application, etc.

The processing of voice call information includes: answering the voice call information and the like; and the processing of text call information includes: checking, editing, forwarding, etc.

In the aforementioned technical solution, preferably, the processing unit is further used for: when the determining unit determines that the information of the initiator is not stored in the terminal, switching the current running system of the terminal into a specified system of the plurality of systems to process the communication event.

In the technical solution, if the information of the initiator of the communication event is not stored in the terminal, it indicates that the information of the initiator of the communication event may not be the important contact, then the communication event can be processed in the specified system with lower security coefficient; and of course, the communication event can also be processed in the system with higher security coefficient.

In the aforementioned technical solution, preferably, the terminal includes a first system and a second system, the specified system is the first system, and then the processing unit includes: a first execution unit used for, when the determining unit determines that the information of the initiator is stored in the second system, carrying out private processing on the communication event to prevent the communication event from being leaked.

In the technical solution, when the communication event is processed in the second system (e.g., a secure system), private processing is carried out on the communication event to prevent the communication event from being leaked and effectively protect the security of the information of the user.

In the aforementioned technical solution, preferably, the processing unit further includes: a second execution unit, used for normally processing the communication event in the first system.

In the technical solution, since the information of the initiator of the communication event may not be the important contact, when switching to the first system, the communication event does not need to be performed with other processing (e.g., private processing) and can be directly processed.

In the aforementioned technical solution, preferably, the carrying out private processing on the communication event includes: modifying and/or concealing the information of the initiator of the communication event, and modifying and/or concealing text contents in the communication event. Of course, anti-eavesdrop processing and the like can also be carried out on the voice call information. According to yet another aspect of the present invention, a terminal is further provided, including the device for processing the communication event of the terminal in any one of the aforementioned technical solutions.

By adopting the above technical solutions, it can be ensured that each system of the terminal respectively processes the communication event of the contact corresponding to the security coefficient of each system, thereby preventing the communication event of the important contact from being leaked, and effectively ensuring the security of the communication event of the important contact. Meanwhile, the resources of a system with a higher security coefficient are prevented from being wasted when the communication event of an unimportant contact is processed in the system with a higher security coefficient.

### Brief Description of the Drawings

Fig. 1 shows a schematic flowchart of a method for processing a communication event of a terminal according to an embodiment of the present invention;
Fig. 2 shows a schematic block diagram of a device for processing a communication event of a terminal according to an embodiment of the present invention;
Fig. 3 shows a structural schematic diagram of a solution for processing a communication event according to an embodiment of the present invention;
Fig. 4 shows a schematic flowchart of a method for processing call information according to an embodiment of the present invention.

### Detailed Description of the Embodiments

In order that the aforementioned purposes, features and advantages of the present invention can be understood more clearly, a further detailed description of the present invention will be given below in combination with accompanying drawings and embodiments. It should be noted that the embodiments of the present application and the features in the embodiments can be combined with each other, as long as no conflict is generated.

A lot of specific details are illustrated in the following description to fully understand the present invention, but the present invention can also be implemented by adopting manners different from the description herein, so the protection scope of the present invention is not limited by the specific embodiments disclosed below.

The terminal in the present invention includes a plurality of systems.

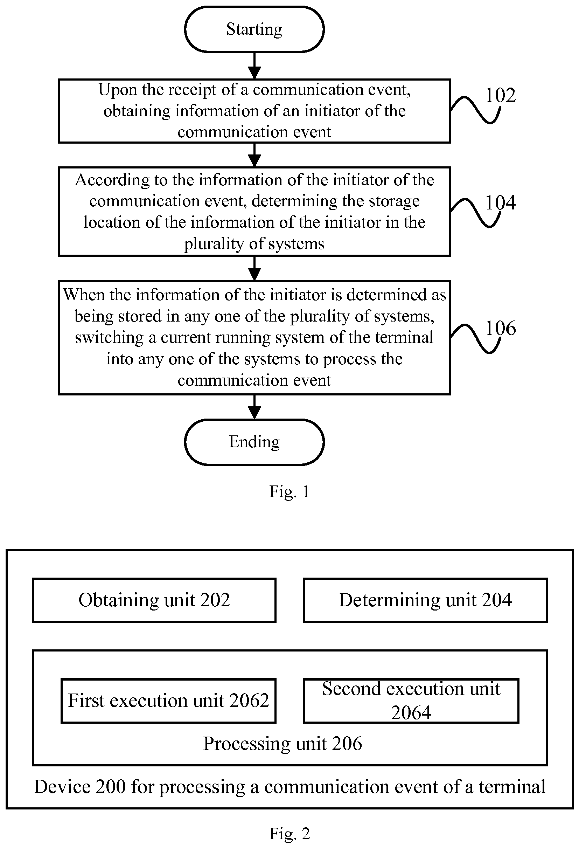

Fig. 1 shows a schematic flowchart of a method for processing a communication event of a terminal according to an embodiment of the present invention.

As shown in Fig. 1, the method for processing the communication event of the terminal according to the embodiment of the present invention includes: step 102, upon the receipt of a communication event, obtaining information of an initiator of the communication event; step 104, according to the information of the initiator of the communication event, determining the storage location of the information of the initiator in the plurality of systems; and step 106, when the information of the initiator is determined as being stored in any one of the plurality of systems, switching a current running system of the terminal into any one of the systems to process the communication event.

In the technical solution, when the information of the initiator of the communication event is determined as being stored in any one of the systems, the current running system of the terminal is switched into any one of the systems to process the communication event. Therefore, when a user needs to process the communication event of an important contact in a system with a higher security coefficient, the important contact can be stored in the system with higher security coefficient, in this way, when the important contact initiates a communication event, the communication event can be switched into the system with higher security coefficient to be processed, in order to prevent the communication event of the important contact from being leaked and effectively ensure the security of the communication event of the important contact. Meanwhile, an unimportant contact can also be stored in a system with a lower security coefficient, so that the resources of a system with a higher security coefficient are prevented from being wasted when the communication event of an unimportant contact is processed in the system with a higher security coefficient.

The information of the initiator can be contact details (e.g., a phone number, a mailbox address and the like) of the initiator, an initiator identifier (e.g., an initiator name), etc.

The communication event includes: a voice communication event and a text communication event. The voice communication event can be a voice call, a voice call in a third party application (e.g., QQ, WeChat or the like); and the text communication event can be a short message, mail information, a text message in the third party application, etc.

The processing of voice call information includes: answering the voice call information and the like; and the processing of text call information includes: checking, editing, forwarding, etc.

In the aforementioned technical solution, preferably, the method further includes: when the information of the initiator is determined as being not stored in the terminal, switching the current running system of the terminal into a specified system of the plurality of systems to process the communication event.

In the technical solution, if the information of the initiator of the communication event is not stored in the terminal, it indicates that the information of the initiator of the communication event may not be the important contact, then the communication event can be processed in the specified system with lower security coefficient; and of course, the communication event can also be processed in the system with higher security coefficient.

In the aforementioned technical solution, preferably, the terminal includes a first system and a second system, the specified system is the first system, and then the method for processing the communication event of the terminal further includes: when the information of the initiator is determined as being stored in the second system, carrying out private processing on the communication event to prevent the communication event from being leaked.

In the technical solution, when the communication event is processed in the second system (e.g., a secure system), private processing is carried out on the communication event to prevent the communication event from being leaked and effectively protect the security of the information of the user.

In the aforementioned technical solution, preferably, the communication event is normally processed in the first system. In the technical solution, since the information of the initiator of the communication event may not be the important contact, when switching to the first system, the communication event does not need to be performed with other processing (e.g., private processing) and can be directly processed.

In the aforementioned technical solution, preferably, the carrying out private processing on the communication event includes: modifying and/or concealing the information of the initiator of the communication event, and modifying and/or concealing text contents in the communication event. Of course, anti-eavesdrop processing and the like can also be carried out on the voice call information.

Fig. 2 shows a schematic block diagram of a device for processing a communication event of a terminal according to an embodiment of the present invention;

As shown in Fig. 2, the device 200 for processing a communication event of a terminal according to the embodiment of the present invention includes: an obtaining unit 202, a determining unit 204 and a processing unit 206.

The obtaining unit 202 is used for: upon the receipt of a communication event, obtaining information of an initiator of the communication event.

The determining unit 204 is used for: according to the information of the initiator of the communication event, determining the storage location of the information of the initiator in the plurality of systems.

The processing unit 206 is used for: when the determining unit 204 determines that the information of the initiator is stored in any one of the plurality of systems, switching a current running system of the terminal into any one of the systems to process the communication event.

In the technical solution, when the determining unit 204 determines that the information of the initiator of the communication event is stored in any one of the systems, the processing unit 206 switches the current running system of the terminal into any one of the systems to process the communication event. Therefore, when a user needs to process the communication event of an important contact in a system with a higher security coefficient, the important contact can be stored in the system with higher security coefficient, in this way, when the important contact initiates the communication event, the communication event can be switched into the system with higher security coefficient to be processed, in order to prevent the communication event of the important contact from being leaked and effectively ensure the security of the communication event of the important contact. Meanwhile, an unimportant contact can also be stored in a system with a lower security coefficient, so that the resources of a system with a higher security coefficient are prevented from being wasted when the communication event of an unimportant contact is processed in the system with a higher security coefficient.

The information of the initiator can be contact details (e.g., a phone number, a mailbox address and the like) of the initiator, an initiator identifier (e.g., an initiator name), etc.

The communication event includes: a voice communication event and a text communication event. The voice communication event can be a voice call, a voice call in a third party application (e.g., QQ, WeChat or the like); and the text communication event can be a short message, mail information, a text message in the third party application, etc.

The processing of voice call information includes: answering the voice call information and the like; and the processing of text call information includes: checking, editing, forwarding, etc.

In the aforementioned technical solution, preferably, the processing unit 206 is further used for: when the determining unit 204 determines that the information of the initiator is not stored in the terminal, switching the current running system of the terminal into a specified system of the plurality of systems to process the communication event.

In the technical solution, if the information of the initiator of the communication event is not stored in the terminal, it indicates that the information of the initiator of the communication event may not be the important contact, then the communication event can be processed in the specified system with lower security coefficient; and of course, the communication event can also be processed in the system with higher security coefficient.

In the aforementioned technical solution, preferably, the terminal includes a first system and a second system, the specified system is the first system, and then the processing unit 206 includes: a first execution unit 2062 used for, when the determining unit 204 determines that the information of the initiator is stored in the second system, carrying out private processing on the communication event to prevent the communication event from being leaked.

In the technical solution, when the communication event is processed in the second system (e.g., a secure system), private processing is carried out on the communication event to prevent the communication event from being leaked and effectively protect the security of the information of the user.

In the aforementioned technical solution, preferably, the processing unit 206 further includes: a second execution unit 2064, used for normally processing the communication event in the first system.

In the technical solution, since the information of the initiator of the communication event may not be the important contact, when switching to the first system, the communication event does not need to be performed with other processing (e.g., private processing) and can be directly processed.

In the aforementioned technical solution, preferably, the carrying out private processing on the communication event includes: modifying and/or concealing the information of the initiator of the communication event, and modifying and/or concealing text contents in the communication event. Of course, anti-eavesdrop processing and the like can also be carried out on the voice call information.

The present invention further provides a terminal (not shown in the figures), including the device 200 for processing the communication event of the terminal as shown in Fig. 2.

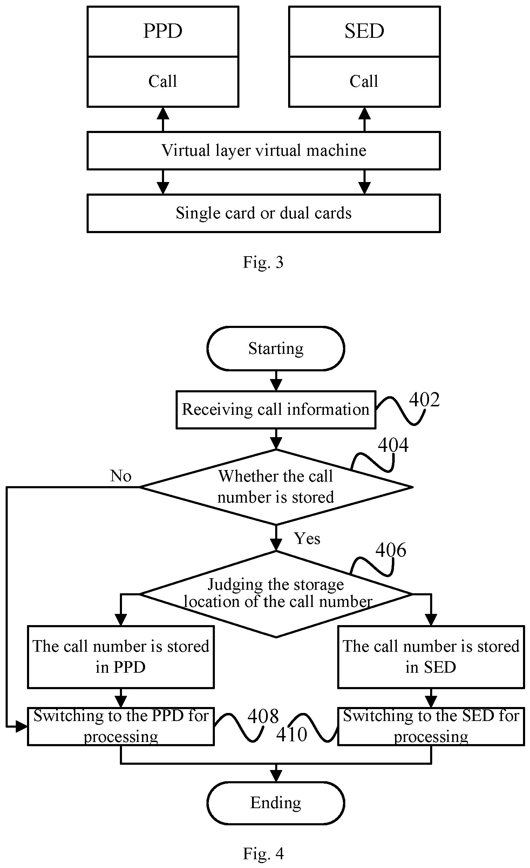

The technical solutions of the present invention will be illustrated in detail by a terminal having a standard system (PPD) and a secure system (SED) in Fig. 3 and Fig. 4, with processing call information as an example.

As shown in Fig. 3, the terminal provided according to the embodiment of the present invention includes a virtual layer virtual machine. When there is a call, the virtual layer virtual machine will firstly inquire a contact database to judge whether the call has been stored, if not, it indicates that the call number belongs to a strange call, and the virtual layer virtual machine will control to answer the call in the PPD; and if the call can be inquired, the storage location of the number is determined, the corresponding system is selected to answer the call according to the system in which the number is stored, that is, if the number is stored in the PPD, the virtual layer virtual machine switches to the PPD to answer the call, and if the number is stored in the SED, the virtual layer virtual machine switches to the SED to answer the call. The specific flow is as shown in Fig. 4.

As shown in Fig. 4, the method for processing call information according to the embodiment of the present invention includes:
Step 402, call information is received.
Step 404, whether the call number is stored is judged, and if so, step 406 is executed; and otherwise, step 408 is executed.
Step 406, when it is judged that the call number is stored, the storage location of the number is judged, and if the number is stored in the PPD, step 408 is executed; and otherwise, step 410 is executed.
Step 408, the call information is processed in the PPD.
Step 410, the call information is processed in the SED.

The manner of processing other communication information is similar to the manner of processing the call information, and thus will not be repeated redundantly.

It should be understood by those skilled in the art that the solution for processing the communication event is merely illustrated in the aforementioned embodiment with the terminal having dual systems as an example, and terminals having three or more systems can also adopt the technical solutions of the present invention to process the communication event.

The technical solutions of the present invention have been illustrated above in detail in combination with the accompanying drawings. The present invention provides a new solution for processing the communication event of the terminal, which can ensure that each system of the terminal respectively processes the communication event of the contact corresponding to the security coefficient of each system, thereby preventing the communication event of an important contact from being leaked, and effectively ensuring the security of the communication event of the important contact. Meanwhile, the resources of a system with a higher security coefficient are prevented from being wasted when the communication event of an unimportant contact is processed in the system with a higher security coefficient.

The foregoing descriptions are merely preferred embodiments of the present invention, rather than limiting the present invention. The present invention can have a variety of variations and modifications for those skilled in the art. Any modifications, equivalent substitutions, improvements and the like made within the spirit and principle of the present invention shall all fall within the protection scope of the present invention.

## Claims

1. A method for processing a communication event of a terminal, wherein the terminal comprises a plurality of systems, and the method for processing the communication event of the terminal comprises:
upon the receipt of a communication event, obtaining information of an initiator of the communication event;
according to the information of the initiator of the communication event, determining the storage location of the information of the initiator in the plurality of systems; and
when the information of the initiator is determined as being stored in any one of the plurality of systems, switching a current running system of the terminal into any one of the systems to process the communication event.

2. The method for processing the communication event of the terminal of claim 1, further comprising:
when the information of the initiator is determined as being not stored in the terminal,
switching the current running system of the terminal into a specified system of the plurality of systems to process the communication event.

3. The method for processing the communication event of the terminal of claim 2, wherein the terminal comprises a first system and a second system, the specified system is the first system, and then the method for processing the communication event of the terminal further comprises:
when the information of the initiator is determined as being stored in the second system, carrying out private processing on the communication event to prevent the communication event from being leaked.

4. The method for processing the communication event of the terminal of claim 3, further comprising: normally processing the communication event in the first system.

5. The method for processing the communication event of the terminal of claim 3 or 4, wherein the carrying out private processing on the communication event comprises:
modifying and/or concealing the information of the initiator of the communication event, and modifying and/or concealing text contents in the communication event.

6. A device for processing a communication event of a terminal, wherein the terminal comprises a plurality of systems, and the device for processing the communication event of the terminal comprises:
an obtaining unit used for, upon the receipt of a communication event, obtaining information of an initiator of the communication event;
a determining unit used for, according to the information of the initiator of the communication event, determining the storage location of the information of the initiator in the plurality of systems; and
a processing unit used for, when the determining unit determines that the information of the initiator is stored in any one of the plurality of systems, switching a current running system of the terminal into any one of the systems to process the communication event.

7. The device for processing the communication event of the terminal of claim 6, wherein the processing unit is further used for:
when the determining unit determines that the information of the initiator is not stored in the terminal, switching the current running system of the terminal into a specified system of the plurality of systems to process the communication event.

8. The device for processing the communication event of the terminal of claim 7, wherein the terminal comprises a first system and a second system, the specified system is the first system, and then the processing unit comprises:
a first execution unit used for, when the determining unit determines that the information of the initiator is stored in the second system, carrying out private processing on the communication event to prevent the communication event from being leaked.

9. The device for processing the communication event of the terminal of claim 8, wherein the processing unit further comprises:
a second execution unit, used for normally processing the communication event in the first system.

10. A terminal, comprising the device for processing the communication event of the terminal of any one of claims 6-9.
